# EUROPEAN PATENT SPECIFICATION

(11) **EP 3 623 189 B1**
(45) Date of publication and mention of the grant of the patent: **01.09.2021**
(21) Application number: 19196486.5
(22) Date of filing: 10.09.2019
(51) Int. Cl.: B60J 5/06

(54) **HYBRID SUSPENSION TARPAULIN**
HYBRIDE PLANENAUFHÄNGUNG
SUSPENSION DE BÂCHE HYBRIDE

(30) Priority: 12.09.2018 BE 201805625
(43) Date of publication of application: 18.03.2020
(73) Proprietor: Versus-Omega BVBA, 3660 Oudsbergen (BE)
(72) Inventor: Rogiers, Erik Ronny Felix, 3850 KOZEN (BE)
(74) Representative: Philippaerts, Yannick

(56) References cited:
- FR-A1- 2 595 304
- GB-A- 2 093 099
- GB-A- 2 145 759

## Description

The invention relates to a system for suspending a tarpaulin for the purpose of closing a side of a loading space. Such suspension systems typically comprise a support beam provided with rails in which wheels of carriages can roll. The tarpaulin is suspended from these carriages.

Loading spaces enclosed by load containers, in particular mobile load containers situated on trucks and/or trains, must comply with predetermined maximum outer dimensions. These outer dimensions are often imposed by law. The loading space, which is the space effectively available inside the load container, is limited by these prescribed maximum dimensions. Sides of such loading spaces are often closed off with a tarpaulin which can be slid open in order to thus provide access to the loading space via the respective side. In order to obtain maximum loading space the tarpaulin is attached to an outermost peripheral edge of the load container.

The tarpaulin is typically suspended from carriages which can roll over tracks in rails present in a support beam. The carriages bear the tarpaulin and are themselves supported by the support beam. The carriages allow sliding open of the tarpaulin by rolling the carriages over the rails to one end of the support beam in the longitudinal direction of the support beam. When the tarpaulin is opened the wheels roll over the tracks in the rails, whereby the resistance to opening of the tarpaulin is minimized.

EP2371595 describes a traditional system for suspending a tarpaulin. Such a traditional system for attaching a tarpaulin for the purpose of closing a side of a loading space has an upper support beam and a lower support beam which are situated at the position of respectively an upper side and a lower side of the loading space, wherein the upper support beam comprises an upper rail which is compatible with upper carriages and wherein the tarpaulin is connected to the upper carriages, all this such that the tarpaulin can be opened and closed through movement of the carriages in a longitudinal direction of the support beam. In such a traditional system the tarpaulin has on a lower side attaching elements, such as hooks with buckles, for the purpose of releasably connecting the tarpaulin to the lower support beam so that the tarpaulin can be attached between the upper carriages and the lower support beam. Such systems are heretofore still used frequently, particularly in large loading spaces. A traditional system is opened by releasing the attaching elements, whereby the tarpaulin is detached from the lower support beam on its lower side. The tarpaulin can then be slid open through movement of the upper carriages relative to the upper support beam. In practice the tarpaulin is pulled away from the loading space at the bottom and simultaneously slid toward a front or rear of the loading space. The tarpaulin is closed by sliding the tarpaulin closed through movement of the upper carriages. When the tarpaulin takes up a substantially final position, each of the attaching elements is connected to the lower support beam so that the tarpaulin is connected on its lower side to the lower support beam.

A traditional system has two significant advantages. A first advantage is that it is an inexpensive system. More specifically, the number of components necessary for guiding the tarpaulin during opening and closing can be minimal, and the complexity of these components is limited. A second advantage is related to the position and the securing of the cargo in the loading space. A traditional system allows the cargo to protrude beyond the outermost peripheral edge of the load container without opening and closing of the loading space being blocked. This is because, as the tarpaulin is released from the lower support beam on the lower side, it can be moved away from the loading space and a cargo which protrudes beyond the peripheral edge can still be enclosed by the tarpaulin. In practice, goods will typically not be placed beyond the edge, but a fixing system which is used to secure the cargo may reach beyond the edge. The cargo can also shift in practice, for instance due to a bend or a braking manoeuvre, whereby the cargo comes to lie outside the peripheral edge after all. When this happens in a loading space with traditional system, the tarpaulin can be opened without problem.

A drawback of a traditional system is that the opening and closing of the tarpaulin is labour-intensive. A further drawback is related to safety, also known as securing of cargo. More specifically, a cargo will always have to be secured in a loading space in order to prevent undesired shifting or even loss of cargo. In some conditions it is permitted, at least under European legislation, not to fixate cargo in the loading space when the side of the loading space has a sufficiently high strength. In order to obtain this strength with a traditional system additional reinforcing elements are typically placed in the form of beams or planks extending between upright supports in the longitudinal direction of the loading space. In order to be able to load and unload the loading space these additional reinforcing elements typically have to be placed and removed manually, which is labour-intensive.

WO2017/214689 describes a system whereby opening and closing of the tarpaulin can be done considerably more quickly. In this system upright posts are connected to carriages at the top and bottom in order to travel in respectively upper and lower rails. With this system an improved safety, more specifically securing of cargo, can be obtained by the presence of the upright posts, without providing additional reinforcing elements. A drawback of the system is however that it is expensive. A further drawback is that the system may become blocked when a cargo shifts and comes to lie beyond the peripheral edge of the loading space.

US6554347 describes an alternative system whereby opening and closing of a tarpaulin can be done considerably faster. In this system the wall comprises plates which are connected to carriages at the top and bottom so as to travel in respectively upper and lower rails. During opening, the plates pivot eccentrically away from the loading space. With this system an improved safety, more specifically securing of cargo, can be obtained by the presence of the plates, without providing additional reinforcing elements. This system is less susceptible to blocking of the system because the plates move eccentrically away from the loading space, whereby a distance is created between the plates and the peripheral edge of the loading space when the loading space is opened. When a cargo however shifts too far over the edge, the system can still become blocked. This system is further very expensive.

GB2093099 discloses a side curtain assembly for good vehicles with an upper rail and a lower rail and upper carriages and lower carriages.

It is an object of the invention to provide a system for attaching a tarpaulin which can be easily opened and closed, wherein the chance of blocking of the system is minimal, and which is inexpensive.

The invention provides for this purpose a system for attaching a tarpaulin for the purpose of closing a side of a loading space, which system comprises an upper support beam and a lower support beam situated at the height of respectively an upper side and a lower side of the loading space, wherein the upper support beam comprises an upper rail which is compatible with upper carriages and wherein the tarpaulin is connected to the upper carriages, all this such that the tarpaulin can be opened and closed through movement of the carriages in a longitudinal direction of the support beam, wherein the tarpaulin has on a lower side attaching elements for releasably connecting the tarpaulin to the lower support beam so that the tarpaulin can be attached between the upper carriages and the lower support beam, characterized in that the lower support beam comprises a lower rail which is compatible with lower carriages, which lower carriages each comprise a connecting element for releasably connecting the attaching elements for the purpose of connecting the tarpaulin to the lower support beam.

The system according to the invention provides a tarpaulin which is suspended from an upper support beam via upper carriages. Provided on the lower side of the tarpaulin are attaching elements which can be connected releasably to a lower support beam. Hereby, the system according to the invention has a relatively simple construction and can be manufactured relatively cheaply. It will also be possible to release the system from the lower support beam in each case during opening, such that the system cannot be blocked. More specifically, cargo can be placed over the peripheral edge of the loading space, or come to lie there as a result of for instance a braking manoeuvre or turning manoeuvre, without this rendering the opening or closing of the tarpaulin impossible. More specifically, for the purpose of opening or closing, the tarpaulin can in each case be pulled away from the loading space and thus be opened and closed. A cargo situated over the peripheral edge of the loading space will not impede movement of the tarpaulin. The skilled person will appreciate that a problem may still arise when the goods are in extreme positions. This is deemed to fall outside the normal operative context of a loading space.

The system according to the invention comprises in its lower support beam a lower rail in which lower carriages are provided. The lower carriages have connecting elements which are provided for connection to the attaching elements located on the tarpaulin. The attaching elements can thus be attached via the lower carriages to the lower support beam. Because the attaching elements are connected via lower carriages to the lower support beam, the tarpaulin can be opened and closed in an alternative manner. More specifically, the attaching elements can remain connected to the lower support beam and the tarpaulin can be slid open through movement of both the upper carriages and the lower carriages in respectively the upper and lower rail. Such a manner of opening and closing the tarpaulin is considerably less labour-intensive than if all attaching elements had to be released. The tarpaulin according to the invention can hereby be opened and closed quickly.

A surprising advantage of the system according to the invention is that the system can be set to multiple heights in simple manner. For this purpose the attaching elements are released from the lower carriages, the height is set, wherein the height is determined by the distance between the lower support beam and the upper support beam, and the attaching elements are then reconnected to the lower carriages.

Providing a lower rail with lower carriages to which the attaching elements are attached has been found in practice to entail only a limited additional complexity of the system. The system according to the invention can hereby be implemented relatively cheaply. The addition of lower carriages in a lower rail to which the attaching elements can be attached does not make the system appreciably more complex than a traditional system.

When a cargo is placed or comes to lie over the peripheral edge of the loading space, the tarpaulin can be released at the bottom by releasing the attaching elements from the carriages. In the released state of the tarpaulin, the tarpaulin can be pulled away from the loading space in simple manner, and so be moved relative to the upper support beam. This allows the tarpaulin to be opened and closed, irrespective of whether and to what extent the cargo protrudes over the peripheral edge. In normal conditions, and when goods are situated within the peripheral edge, the tarpaulin can be opened and closed without the attaching elements having to be released. The tarpaulin can hereby be opened and closed quickly and efficiently, which is time-saving and comfortable.

Each attaching element preferably has a corresponding lower carriage, and a form of each attaching element is compatible with a further form of the corresponding carriage so as to realize the releasable connection. The form and the further form are more preferably adapted to realize a hook connection. By providing each attaching element with a corresponding lower carriage each attaching element can be connected to a corresponding carriage. When the tarpaulin is opened and closed without the attaching elements being released, it will be possible to move each attaching element relative to the lower rail via its corresponding carriage. This allows the tarpaulin to be opened and closed comfortably. Because forms of the attaching element and the lower carriage are adapted to each other, it is simple to realize a releasable connection. A hook connection has been found in practice to be a preferred solution because an attaching element can be easily hooked behind a body part of the carriage, or vice versa. A hook connection has also been found to be a stable connection which can absorb sufficient force and which is still releasable in simple manner.

Each attaching element further preferably comprises a tensioning element for tensioning the tarpaulin in an upward direction between the lower support beam and the upper support beam. The tensioning element is more preferably formed by a buckle or direct tensioner. Tensioning the tarpaulin between the upper support beam and the lower support beam improves the strength of the suspension system for the tarpaulin. More specifically, via the tensioning elements the maximum transverse outward displacement of the tarpaulin can be limited when a pressure is applied transversely of the tarpaulin. This increases the safety of the system and improves the securing of cargo.

Each attaching element preferably has a corresponding upper carriage and the tarpaulin is preferably provided with an upright reinforcement between each attaching element and the corresponding upper carriage. The upright reinforcement is here preferably connected to the upper carriage and connected to the attaching element. The upright reinforcement is more preferably formed by a tape or strip, a welding strip, a cable, a metal profile or a plastic profile connected to the tarpaulin. The upright reinforcement further increases the strength of the system for suspending a tarpaulin. More specifically, the upright reinforcement provides for a reduction of the transverse outward displacement of the tarpaulin when a force is applied to transversely of the tarpaulin. The upright reinforcement improves the safety and the securing of cargo. The upright reinforcements ensure, particularly in combination with the tensioning elements, that a loading space can be constructed which meets legal standards with regard to securing of cargo. So-called XL tests can hereby be passed successfully, whereby the loading space can be loaded more quickly and efficiently.

At least one vertical support is preferably provided between the lower support beam and the upper support beam in order to minimize bending of the upper support beam. More preferably, a plurality of vertical supports are distributed over the length of the side of the loading space in order to support the upper support beam at multiple locations. When the distance between the upper support beam and the lower support beam is not constant, it will be difficult to open and close the tarpaulin through movement of the carriages, without releasing the attaching elements. In order to keep the distance between the lower support beam and the upper support beam constant at least one vertical support is placed between the lower support beam and the upper support beam. The operation of the system is hereby improved, more specifically, the opening and closing of the tarpaulin without attaching elements being released is improved.

The attaching elements preferably further comprise a spring element for allowing a predetermined vertical displacement under a predetermined vertical tension. The spring element for instance allows a vertical displacement of 10 mm at a force of 150 N. This means that when the tarpaulin is tensioned with the vertical tension of 150 N acting on the tensioning element, a variation in distance between the lower support beam and the upper support beam of 10 mm is absorbed by the spring element. This further improves and facilitates the opening and closing of the tarpaulin when the attaching elements are not released from the lower carriages.

The system according to the invention allows the tarpaulin to be opened and closed in a non-tensioned state and in a tensioned state, wherein in the non-tensioned state the attaching elements are released from the lower carriages and wherein the upper carriages move in the upper rail, and wherein in the tensioned state the attaching elements are connected to the lower carriages and wherein the upper and lower carriages move in respectively the upper and lower rail. Because the tarpaulin can be opened and closed in two states, an operator can always choose which state of the tarpaulin is most suitable for opening and/or closing of the tarpaulin. An operator will thus be able to opt to be able to open and close the tarpaulin in tensioned state when goods are situated within the peripheral edge of the loading space. When goods are found to be situated outside the peripheral edge, the operator can opt to open and close the tarpaulin in the non-tensioned state.

The tarpaulin can further preferably be opened and closed in a semi-tensioned state, wherein the tensioning elements are loosened in order to remove the vertical tension from the tarpaulin, and wherein the attaching elements are connected to the lower carriages and wherein the upper and lower carriages move in respectively the upper and lower rail. By removing the tension from the tarpaulin the carriages will roll more smoothly in the rail. The system can here be provided to tension and untension the tensioning elements in simple manner. A system is hereby obtained which has a simple construction and which, depending on the situation, can be operated in a plurality of states. According to the system of the invention, the tarpaulin can also be reinforced such that it closes the loading space with improved safety.

The lower carriages preferably comprise a flexible connecting element for mutually connecting the lower carriages with an intermediate distance which is substantially equal to a further intermediate distance between the attaching elements. Via the flexible connecting element the lower carriages can be easily positioned by an operator correctly over the length of the side for attachment to the attaching elements.

The invention will now be further described on the basis of an exemplary embodiment shown in the drawing.

In the drawing:
figure 1 shows a loading space according to an embodiment of the invention;
figure 2 shows a cross-section of the system for suspending the tarpaulin at the position of the upper support beam;
figure 3 shows a cross-section of the system for suspending the tarpaulin at the position of the lower support beam;
figure 4 illustrates the different operational states of the system for suspending the tarpaulin.

The same or similar elements are designated in the drawing with the same reference numerals.

In the context of this description a hook connection is defined as a connection wherein a hook element can be brought with a distal end beyond a connecting element, such that when a tensile force is exerted on the element, the distal end remains hooked behind the connecting element. A hook connection can be released in simple manner by removing the tensile force and moving the distal end of the hook element away from behind the connecting element.

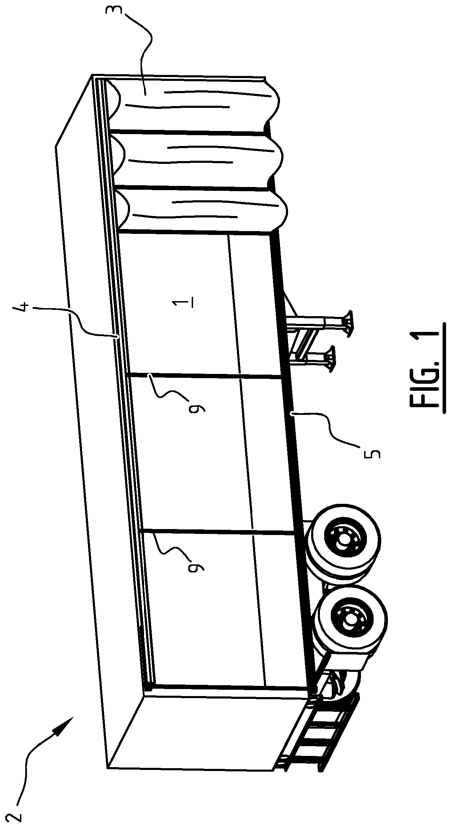

Loading spaces 1 defined by load containers 2, in particular mobile load containers, are used for transport of goods therein. Loading space 1 is here defined as the volume present in load container 2. Load container 2 is formed by the physical components which enclose the loading space. Such a load container 2 is shown in figure 1 as a load container 2 with loading space 1 on a trailer for a truck (not shown). It will however be apparent that the invention is applicable not only to trailers of trucks but also to railway wagons, trucks with fixed load container and further mobile load containers with loading spaces.

Such load containers have outer dimensions typically limited by law. In Belgium for instance an outer dimension with a maximum width of 2.55 m is thus imposed for a non-refrigerated load container of a truck. These imposed maximum outer dimensions will of course affect the maximum loading space available in the load container. In order to maximize this loading space the wall of the loading space is preferably formed on an outermost peripheral edge of the load container. Bearing and support elements with which the load container is constructed and which have a cross-section larger and thicker than the wall of the loading space are therefore preferably located inside this wall so that no part, or only a small part, of these elements protrudes outside this wall. The outer dimensions are in this way defined substantially by the wall of the loading space, this maximizing the room available in the loading space.

The wall is preferably formed by a tarpaulin 3. A tarpaulin 3 typically has a small thickness, and a tarpaulin 3 will therefore be suitable as wall of a load container 2 for closing a loading space 1 since it takes up little loading space 1. A tarpaulin 3 further has the advantage that it is flexible and, provided it is attached via a suitable suspension system, can be pushed away to one side, as illustrated on the right-hand side of the trailer of figure 1, such that the loading space becomes accessible.

Figure 1 shows a trailer wherein tarpaulin 3 is suspended from a suspension system with carriages and support beams, wherein support beams 4 are located on the underside of the tarpaulin as well as on the upper side of the tarpaulin. In such a configuration upright supporting beams 9 can, as shown in figure 1, hold the upper support beam and the lower support beam at a predetermined distance. Upright supporting beams 9 will particularly minimize bending of the upper support beam as a result of the weight of the tarpaulin, and the optional vertical tensioning force on the tarpaulin. In practice the number of supporting beams is chosen between 1 and 6, preferably 2 and 4, most preferably 3 supporting beams are provided.

The tarpaulin is suspended from upper support beam 4 via carriages. Upper support beam 4 is provided for this purpose with an upper rail in which the carriages can roll in the longitudinal direction of the rail.

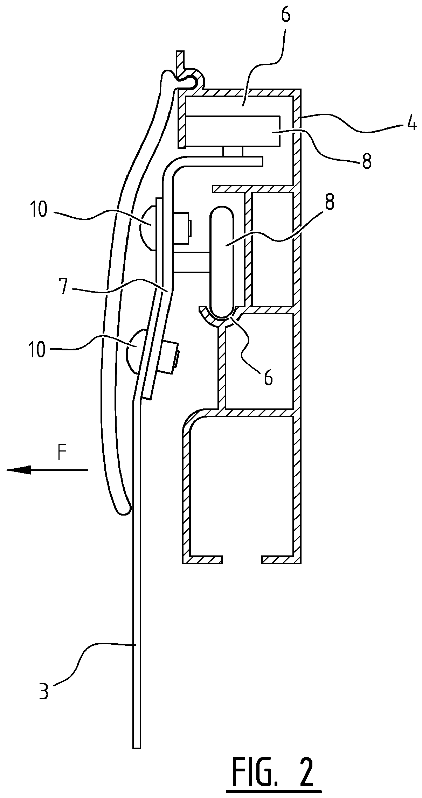

Figure 2 shows a cross-section of load container 2 at the position of the upper support beam 4. Support beam 4 is provided with rails 6. Two rails 6 are provided in support beam 4 in the example of figure 2. Rails 6 are formed here such that wheels 8 of carriages 7 can roll in rails 6 in the longitudinal direction of support beam 4. It will be apparent that carriages 7 and support beam 4 as shown in figure 2 show only one of the many options for upper carriages 7 for suspending a tarpaulin. Where this description states that a carriage rolls in or relative to a support beam, this is implicitly understood to mean that the carriage rolls in rails which are provided in or on the support beam. A tarpaulin 3 is suspended from upper carriages 7. Tarpaulin 3 is connected to carriages 7 via fastening means 10.

Two fastening means 10 per carriage are shown in the example of figure 2, which fastening means are screws or rivets with which tarpaulin 3 is connected to carriage 7. The skilled person will appreciate that other fastening means 10, or a different number thereof, can also be provided for the purpose of fastening tarpaulin 3 to upper carriage 7. By suspending tarpaulin 3 in this or similar manner via carriages 7 from a support beam 4 with rails 6 the tarpaulin 3 can be slid open and closed through travel of the carriages in support beam 4. Travel of carriages 7 toward each other will have the result that tarpaulin 3 located between carriages 7 will bend outward in the manner of a concertina (outward is to the left in figure 2, away from support beam 4). Access can thus be provided to loading space 1.

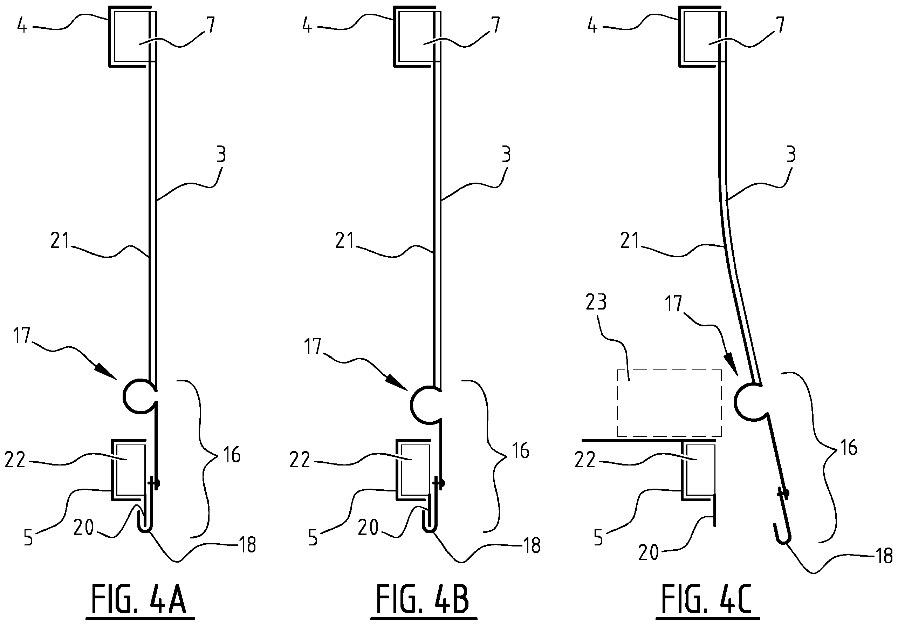

In figure 2 tarpaulin 3 is connected directly to carriage 7 via fastening means 10. In a preferred embodiment, which will be described in detail with reference to figure 4, an upright reinforcing element 21 is also connected directly to carriage 7 via fastening elements 10. Upright reinforcement 21 is preferably provided between carriage 7 and tarpaulin 3, at the position of fastening means 10. The upright reinforcement can be formed by a reinforcing tape or strip, for instance a welding strip. The upright reinforcement is preferably formed by a flexible metal profile. The upright reinforcement ensures, particularly when the underside of the tarpaulin is connected to lower support beam 5, that a strong resistance is obtained against the tarpaulin moving outward in the transverse direction. When a cargo presses against the inner side of the tarpaulin, for instance as a result of a turning manoeuvre, it is stopped by the upright reinforcements. The upright reinforcements further ensure that the tarpaulin is damaged or tears less easily when goods are pressed against the tarpaulin. This considerably improves the safety of the system. A metal profile, particularly a flexible metal profile, a steel cable or a welding strip as upright reinforcement allows movement of the tarpaulin and can be manipulated when the tarpaulin is opened and closed.

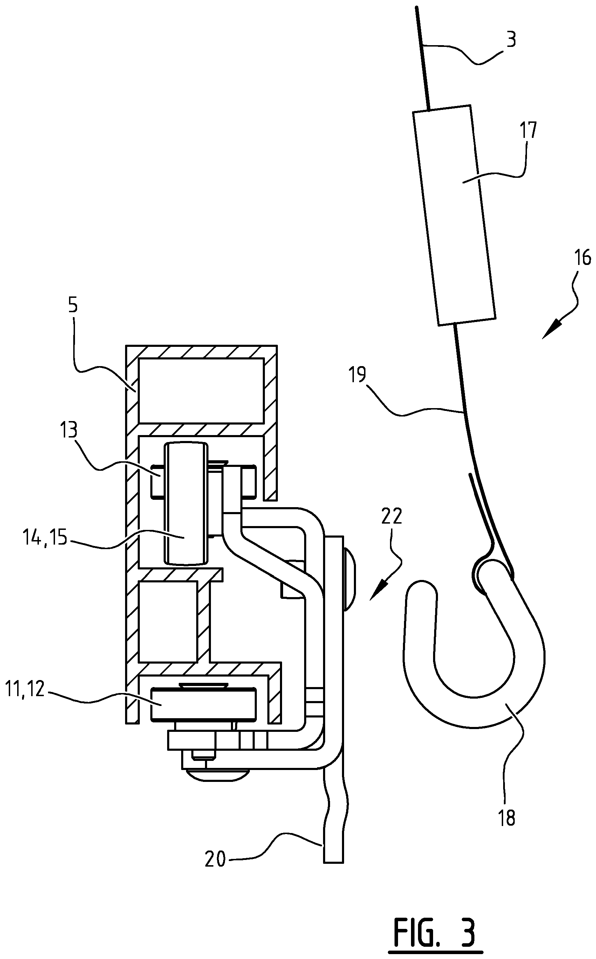

Figure 3 shows a cross-section of the system for suspending a tarpaulin at the position of lower support beam 5. Shown in lower support beam 5 is a lower carriage 22. Lower carriage 22 is embodied with five wheels. Lower carriage 22 has two lower wheels 11 and 12 which are positioned for rolling against upright tracks. Lower carriage 22 further has an upper wheel 13 which is also provided for rolling against upright tracks. At the top, lower carriage 22 has two further upper wheels 14 and 15 which are positioned for rolling against lying rails. The advantages of such a carriage are described in EP 2 708 395. The advantages of this carriage relate particularly to the countering of forces. More specifically, torques and translational forces in multiple directions can be countered efficiently, thus guaranteeing smooth rolling of the carriage in the rail. In this context it is noted that a carriage is shown and described above, with reference to figure 2, with a simpler construction. It will be apparent to the skilled person that a carriage with five wheels as shown in figure 3 can also be used in the upper rail. It will also be apparent to the skilled person that a simpler carriage, for instance a carriage as shown in figure 2, can be applied in the lower support beam. The use of upper carriages with three wheels as shown in figure 2 in an upper rail and the use of the lower carriages with five wheels as shown in figure 3 is a preferred embodiment.

Lower carriage 22 has a connecting element 20. Connecting element 20 is preferably formed as an edge extending at least partially downward, such that a hook element 18 can hook with a distal end behind the edge. Hook 18 is shown in figure 3 as lower end of tarpaulin 3. Hook 18 forms part of an attaching element 16 with which tarpaulin 3 can be attached at the position of its lower side to the lower carriage 22.

Figure 3 shows a preferred embodiment wherein attaching element 16 comprises a hook 18 which can be hooked behind connecting element 20 of carriage 22. Attaching element 16 further comprises a tensioning element which is placed between hook 18 and tarpaulin 3 for the purpose of tensioning the tarpaulin in the upward direction. Such tensioning elements and hooks are known from traditional systems for suspending a tarpaulin, where the hooks and tensioning elements are attached directly to the lower support beam.

Figure 3 further shows a tensioning strap 19 between hook 18 and tensioning element 17. The tensioning strap is typically compatible with the tensioning element, such that the tensioning strap and the tensioning element can alter the distance between hook 18 and tarpaulin 3 and can thereby apply tension to tarpaulin 3. Direct tensioners, typically operating on the basis of an overcentre rotation movement, are commercially available. Alternatively, a buckle can be provided as tensioning element, which buckle is typically connected with its housing to tarpaulin 3, while a tensioning strap 19, typically formed by a rigid textile strap, is provided between the buckle and hook element 18.

The hook and the connecting element 20 are preferably adapted to each other such that a simple coupling and uncoupling can be realized. As an alternative to the shown embodiment, a snap system can also be provided, wherein attaching element 16 is snapped together with or onto carriage 22 and can also be unsnapped from carriage 22. Attaching element 16 and connecting element 20 are adapted to each other such that an upward tension on tarpaulin 3 can be realized in the connected state. Although not shown, attaching element 16 further preferably has a spring element which allows a predetermined movement in the upward direction of tarpaulin 3 relative to hook element 18, while a minimal predetermined tensile force keeps being exerted between the tarpaulin and hook element 18. As described above, this allows variations in the distance between upper support beam 4 and lower support beam 5 to be absorbed in simple manner.

Figure 4 illustrates the operation of the system according to the invention. Figure 4 shows here three operational states. Figure 4A shows the tensioned operational state. Figure 4B shows a non-tensioned, coupled operational state, figure 4C shows an uncoupled operational state. Figure 4 shows here at the top the upper support beam 4 and upper carriage 7 in basic view. Figure 4 further shows the tarpaulin 3 which extends between upper carriage 7 and attaching element 16 in basic view. Figure 4 further shows at the bottom the lower support beam 5 and lower carriage 22.

Figure 4A shows the tensioned state, wherein tensioned relates to the state of tarpaulin 3. In figure 4A attaching element 16 is connected to lower carriage 22. More specifically, the distal end of the hook part 18 of attaching element 16 engages behind an edge of connecting element 20 of carriage 22. Attaching element 16 is thereby connected to carriage 22. Tarpaulin 3 is hereby also connected via attaching element 16 and carriage 22 to lower support beam 5. In the state as shown in figure 4A the tensioning element 17 is tensioned. This means that tarpaulin 3 is tensioned between lower support beam 5 and upper support beam 4.

Figure 4 further shows that an upright reinforcement 21 extends between attaching element 16 and upper carriage 7. Attaching element 16 is preferably connected directly to the upright reinforcement, such that the tensioning force applied by attaching element 16 engages directly on the upright reinforcement. Because the upright reinforcement is connected directly to the upper carriage at the top, and directly to attaching element 16 at the bottom, the upward force is at least not wholly realized via the tarpaulin.

In the closed state as shown in figure 4A the tarpaulin can be opened and closed by rolling the upper and lower carriages substantially synchronously in their respective rails. Opening and closing of the tarpaulin in this state is the least labour-intensive, because attaching elements 16 need not be manipulated. In practice an operator will open and close the tarpaulin in this state because this is the least labour-intensive, unless there are specific reasons to opt for a different state which will be elucidated below.

The state of figure 4B corresponds substantially to the state of figure 4A, with the difference that tensioning element 17 is placed in a non-tensioned state. In the state of figure 4B attaching element 16 is however still connected to carriage 22. This state is referred to as the non-tensioned but attached state. Because the upward tension is considerably smaller than in the state of figure 4A, carriages 7 and 22 can roll more easily relative to the support beams. It is particularly when wheels are worn or damaged, or when a support beam 4, 5 is fouled or damaged, that this state can facilitate the opening and closing of the tarpaulin. In this state an operator will only need to operate the tensioning element, and not release the whole underside of the tarpaulin from the lower support beam. The opening and closing of the tarpaulin in this state will therefore still be considerably less labour-intensive than the opening and closing of a traditional tarpaulin.

Figure 4C shows an uncoupled state. In this state attaching element 16 has been released from lower carriage 22. In this state tarpaulin 3 hangs only from upper carriages 7 and can move freely at the bottom. More specifically, the tarpaulin can be pulled away from the loading space, as illustrated in figure 4C. Opening and closing of the tarpaulin in this state is opted for by an operator particularly when goods, illustrated with reference numeral 23 in figure 4C, are situated over the peripheral edge of the loading space. When a good is in such a position, the good prevents the tarpaulin from being opened and closed in a connected state. This is because, in the connected state, the tarpaulin and more specifically the upright reinforcement 21 would collide with the good 23, making advancement in the longitudinal direction of the tarpaulin impossible.

In order to facilitate simple connection of attaching elements 16 to lower carriages 20 a carriage is preferably provided for each attaching element. As seen in the longitudinal direction of the tarpaulin, the attaching elements have an intermediate distance which is substantially constant. This intermediate distance is determined by the connection of successive attaching elements to tarpaulin 3. The carriages are preferably mutually connected with a flexible connecting element, preferably a cord or rope, with an intermediate distance which is substantially equal to the intermediate distance between the attaching elements. On the one hand, this allows the tarpaulin to be slid closed separately of the carriages. On the other hand, all carriages can be positioned correctly with one operation by means of the flexible connecting element. This is because, just as the tarpaulin comprises the different attaching elements with a substantially constant intermediate distance, and sliding closed of the tarpaulin automatically positions the attaching elements, the connecting element for the carriages can also be used to position the carriages. After this, an operator can connect each attaching element 16 to its corresponding lower carriage in simple manner.

The upright reinforcement 21 is preferably held in a holder which is attached to the tarpaulin. The holder can be attached by welding, by adhesion or via fastening means such as screws or rivets. The holder can be formed by a further piece of tarpaulin material which is connected as a strip to the tarpaulin on either side of the strips, whereby an opening is created in the centre of the strip between the tarpaulin and the strip, in which opening the upright reinforcement 21 can be placed. Alternatively, a fold can be created with a further piece of tarpaulin material, which fold is attached to the tarpaulin on the open side. The fold is then also closed on the open side by the attachment. This attachment can be a combination of welding, adhesion or fastening means such as screws or rivets. The fold preferably extends over the full height, or in any case over substantially the full height of the tarpaulin. Created via the strip or fold is a sleeve in which an upright reinforcement 21 can be placed.

Upright reinforcement 21 can be formed by a cable of substantially circular cross-section. This cable can be a metal cable of solid material or can be a stranded steel wire (which typically has a greater flexibility). Because the steel cable is confined in a fold, the steel cable cannot move in a direction transversely of its length relative to the tarpaulin. The cable can however slide in and out of the fold and can hereby thus move in its longitudinal direction relative to the tarpaulin.

The upright reinforcement can alternatively be formed by a belt, preferably a metal belt. Belt is defined here as a winding material of substantially elongate cross-section. Belt 11 can be a metal belt or a plastic belt. As further alternative, an upright reinforcement can be provided from carbon. Because belt 11 is in a sleeve, it can move in its longitudinal direction relative to tarpaulin 3, but movements transversely of the longitudinal direction of the belt are prevented. The advantage of a belt over a cable with the same cross-sectional area is that the belt pleats together with tarpaulin 3 more easily. A belt also has a higher resistance to tension. The belt, just as a cable, will further be suitable as upright reinforcement because it can be tensioned in simple manner between upper and lower carriages.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. System for attaching a tarpaulin (3) for the purpose of closing a side of a loading space (1), which system comprises an upper support beam (4) and a lower support beam (5) situated at the height of respectively an upper side and a lower side of the loading space, wherein the upper support beam comprises an upper rail which is compatible with upper carriages and wherein the tarpaulin is connected to the upper carriages (7), all this such that the tarpaulin can be opened and closed through movement of the carriages in a longitudinal direction of the support beam, wherein the tarpaulin has on a lower side attaching elements (16) for connecting the tarpaulin to the lower support beam so that the tarpaulin can be attached between the upper carriages and the lower support beam, which lower support beam comprises a lower rail which is compatible with lower carriages (22), **characterized in that** the lower carriages each comprise a connecting element (20) for releasably connecting the attaching elements for the purpose of releasing and connecting the tarpaulin from and to the lower support beam for enabling an operator to opt for opening and closing the side of the loading space in an uncoupled state where the tarpaulin is released from the lower carriages as an alternative to a state where the tarpaulin is connected to the lower carriages.

2. System according to claim 1, wherein each attaching element has a corresponding lower carriage (22) and wherein a form of each attaching element (16) is compatible with a further form of the corresponding carriage so as to realize the releasable connection.

3. System according to claim 2, wherein the form and the further form are adapted to realize a hook connection (18).

4. System according to any one of the foregoing claims, wherein each attaching element (16) further comprises a tensioning element (17) for tensioning the tarpaulin in an upward direction between the lower support beam and the upper support beam.

5. System according to claim 4, wherein the tensioning element (17) is formed by a buckle or by a direct tensioner.

6. System according to any one of the foregoing claims, wherein each attaching element (16) has a corresponding upper carriage and wherein the tarpaulin is provided with an upright reinforcement (21) between each attaching element and the corresponding upper carriage.

7. System according to claim 6, wherein the upright reinforcement (21) is connected to the upper carriage and is connected to the attaching element.

8. System according to claim 7, wherein the upright reinforcement (21) is formed by a tape or strip, a welding strip, a cable, a metal profile or a plastic profile connected to the tarpaulin.

9. System according to any one of the foregoing claims, wherein at least one vertical support is provided between the lower support beam and the upper support beam in order to minimize bending of the upper support beam.

10. System according to any one of the foregoing claims, wherein the attaching elements (16) further comprise a spring element for allowing a predetermined vertical displacement under a predetermined vertical tension.

11. System according to any one of the foregoing claims, wherein the tarpaulin (3) can be opened and closed in a non-tensioned state and in a tensioned state, wherein in the non-tensioned state the attaching elements are released from the lower carriages and wherein the upper carriages move in the upper rail, and wherein in the tensioned state the attaching elements are connected to the lower carriages and wherein the upper and lower carriages move in respectively the upper and lower rail.

12. System according to claim 11 and claim 4 or 5, wherein the tarpaulin can further be opened and closed in a semi-tensioned state, wherein the tensioning elements are loosened in order to remove the vertical tension from the tarpaulin, and wherein the attaching elements are connected to the lower carriages and wherein the upper and lower carriages move in respectively the upper and lower rail.

13. System according to any one of the foregoing claims, wherein the lower carriages (22) comprise a flexible connecting element for mutually connecting the lower carriages with an intermediate distance which is substantially equal to a further intermediate distance between the attaching elements.

## Patentansprüche

1. System zum Anbringen einer Plane (3) zum Zwecke des Verschließens einer Seite eines Laderaums (1), wobei das System einen oberen Tragbalken (4) und einen unteren Tragbalken (5) aufweist, die sich auf der Höhe einer oberen Seite bzw. einer unteren Seite des Laderaums befinden, wobei der obere Tragbalken eine obere Schiene aufweist, die mit oberen Schlitten kompatibel ist, und wobei die Plane mit den oberen Schlitten (7) verbunden ist, all dies derart, dass die Plane durch Bewegung der Schlitten in einer Längsrichtung des Tragbalkens geöffnet und geschlossen werden kann, wobei die Plane an einer unteren Seite Befestigungselemente (16) aufweist, zum Verbinden der Plane mit dem unteren Tragbalken, so dass die Plane zwischen den oberen Schlitten und dem unteren Tragbalken befestigt werden kann, wobei der untere Tragbalken eine untere Schiene aufweist, die mit unteren Schlitten (22) kompatibel ist, **dadurch gekennzeichnet, dass** die unteren Schlitten jeweils ein Verbindungselement (20) zum lösbaren Verbinden der Befestigungselemente zum Zweck des Lösens und Verbindens der Plane von und mit dem unteren Tragbalken aufweisen, um es einem Bediener zu ermöglichen, zwischen Öffnen und Schließen der Seite des Laderaums in einem gelösten Zustand, in dem die Plane von den unteren Schlitten gelöst ist, zu wählen, als Alternative zu einem Zustand, in dem die Plane mit den unteren Schlitten verbunden ist.

2. System nach Anspruch 1, wobei jedes Befestigungselement einen entsprechenden unteren Schlitten (22) aufweist und wobei eine Ausbildung jedes Befestigungselements (16) mit einer weiteren Ausbildung des entsprechenden Schlittens kompatibel ist, um die lösbare Verbindung zu realisieren.

3. System nach Anspruch 2, wobei die Ausbildung und die weitere Ausbildung zur Realisierung einer Hakenverbindung (18) entsprechend angepasst sind.

4. System nach einem der vorherigen Ansprüche, wobei jedes Befestigungselement (16) weiterhin ein Spannelement (17) aufweist, zum Spannen der Plane in einer vertikalen Richtung zwischen dem unteren Tragbalken und dem oberen Tragbalken.

5. System nach Anspruch 4, wobei das Spannelement (17) durch eine Schnalle oder durch einen Direktspanner gebildet ist.

6. System nach einem der vorherigen Ansprüche, wobei jedes Befestigungselement (16) einen entsprechenden oberen Schlitten aufweist und wobei die Plane mit einer vertikalen Verstärkung (21) zwischen jedem Befestigungselement und dem entsprechenden oberen Schlitten versehen ist.

7. System nach Anspruch 6, wobei die vertikale Verstärkung (21) mit dem oberen Schlitten und mit dem Befestigungselement verbunden ist.

8. System nach Anspruch 7, wobei die vertikale Verstärkung (21) durch ein Band oder Streifen, ein Schweißband, ein Kabel, ein Metallprofil oder ein Kunststoffprofil gebildet ist, welches mit der Plane verbunden ist.

9. System nach einem der vorherigen Ansprüche, wobei zwischen dem unteren Tragbalken und dem oberen Tragbalken zumindest eine vertikale Stütze vorgesehen ist, um ein Durchbiegen des oberen Tragbalkens zu minimieren.

10. System nach einem der vorherigen Ansprüche, wobei die Befestigungselemente (16) ferner ein Federelement aufweisen, um eine vorgegebene vertikale Verschiebung unter einer vorgegebenen vertikalen Spannung zu ermöglichen.

11. System nach einem der vorherigen Ansprüche, wobei die Plane (3) in einem ungespannten und in einem gespannten Zustand geöffnet und geschlossen werden kann, wobei im ungespannten Zustand die Befestigungselemente von den unteren Schlitten gelöst sind, wobei sich die oberen Schlitten in der oberen Schiene bewegen, und wobei im gespannten Zustand die Befestigungselemente mit den unteren Schlitten verbunden sind, wobei sich die oberen und unteren Schlitten in der oberen bzw. unteren Schiene bewegen.

12. System nach Anspruch 11 und nach Anspruch 4 oder 5, wobei die Plane weiterhin in einem halbgespannten Zustand geöffnet und geschlossen werden kann, wobei die Spannelemente gelöst werden, um die vertikale Spannung von der Plane zu nehmen, und wobei die Befestigungselemente mit den unteren Schlitten verbunden sind und die oberen und unteren Schlitten sich in der oberen bzw. unteren Schiene bewegen.

13. System nach einem der vorherigen Ansprüche, wobei die unteren Schlitten (22) ein flexibles Verbindungselement zum gegenseitigen Verbinden der unteren Schlitten aufweisen mit einem Zwischenabstand, der im Wesentlichen gleich einem weiteren Zwischenabstand zwischen den Befestigungselementen ist.

## Revendications

1. Dispositif de fixation d'une bâche de protection (3) destiné à fermer un côté d'un espace de chargement (1), lequel dispositif comprend une poutrelle de support supérieure (4) et une poutrelle de support inférieure (5) situées respectivement à la hauteur d'un côté supérieur et d'un côté inférieur de l'espace de chargement, dans lequel la poutrelle de support supérieure comprend un rail supérieur qui est compatible avec des chariots supérieurs et dans lequel la bâche est reliée aux chariots supérieurs (7), ceci, de telle sorte que la bâche peut être ouverte et fermée par l'intermédiaire du mouvement des chariots dans une direction longitudinale de la poutrelle de support, dans lequel la bâche comporte, sur un côté inférieur, des éléments de fixation (16) destinés à relier la bâche à la poutrelle de support inférieure de telle sorte que la bâche peut être fixée entre les chariots supérieurs et la poutrelle de support inférieure, laquelle poutrelle de support inférieure comprend un rail inférieur qui est compatible avec des chariots inférieurs (22), **caractérisé en ce que** les chariots inférieurs comprennent chacun un élément de liaison (20) destiné à relier de manière amovible les éléments de fixation dans le but de séparer la bâche de la poutrelle de support inférieure et de la relier à celle-ci afin de permettre à un opérateur de choisir entre l'ouverture et la fermeture du côté de l'espace de chargement dans un état découplé dans lequel la bâche est séparée des chariots inférieurs en tant que variante à un état dans lequel la bâche est reliée aux chariots inférieurs.

2. Dispositif selon la revendication 1, dans lequel chaque élément de fixation comporte un chariot inférieur (22) correspondant et dans lequel une forme de chaque élément de fixation (16) est compatible avec une forme complémentaire du chariot correspondant de manière à réaliser la liaison amovible.

3. Dispositif selon la revendication 2, dans lequel la forme et la forme complémentaire sont adaptées de manière à réaliser une liaison à crochet (18).

4. Dispositif selon l'une quelconque des revendications précédentes, dans lequel chaque élément de fixation (16) comprend, en outre, un élément de traction (17) destiné à tendre la bâche dans une direction verticale entre la poutrelle de support inférieure et la poutrelle de support supérieure.

5. Dispositif selon la revendication 4, dans lequel l'élément de traction (17) est formé par une boucle ou par un tendeur direct.

6. Dispositif selon l'une quelconque des revendications précédentes, dans lequel chaque élément de fixation (16) comporte un chariot supérieur correspondant et dans lequel la bâche comporte un élément de renforcement vertical (21) entre chaque élément de fixation et le chariot supérieur correspondant.

7. Dispositif selon la revendication 6, dans lequel l'élément de renforcement vertical (21) est relié au chariot supérieur et est relié à l'élément de fixation.

8. Dispositif selon la revendication 7, dans lequel l'élément de renforcement vertical (21) est formé par un ruban ou bande, une bande de soudage, un câble, un profilé métallique ou un profilé en matière plastique relié à la bâche.

9. Dispositif selon l'une quelconque des revendications précédentes, dans lequel au moins un support vertical est agencé entre la poutrelle de support inférieure et la poutrelle de support supérieure dans le but de minimiser le cintrage de la poutrelle de support supérieure.

10. Dispositif selon l'une quelconque des revendications précédentes, dans lequel les éléments de fixation (16) comprennent, en outre, un élément élastique afin de permettre un déplacement vertical prédéterminé sous une tension verticale prédéterminée.

11. Dispositif selon l'une quelconque des revendications précédentes, dans lequel la bâche (3) peut être ouverte et fermée dans un état non tendu et dans un état tendu, dans lequel, dans l'état non tendu, les éléments de fixation sont libérés des chariots inférieurs et dans lequel les chariots supérieurs se déplacent sur le rail supérieur, et dans lequel, dans l'état tendu, les éléments de fixation sont reliés aux chariots inférieurs et dans lequel les chariots supérieurs et inférieurs se déplacent respectivement sur les rails supérieur et inférieur.

12. Dispositif selon les revendications 11 et 4 ou 5, dans lequel la bâche peut, en outre, être ouverte et fermée dans un état semi-tendu, dans lequel les éléments de tension sont relâchés dans le but de supprimer la tension verticale à partir de la bâche, et dans lequel les éléments de fixation sont reliés aux chariots inférieurs et dans lequel les chariots supérieurs et inférieurs se déplacent respectivement sur les rails supérieur et inférieur.

13. Dispositif selon l'une quelconque des revendications précédentes, dans lequel les chariots inférieurs (22) comprennent un élément de liaison flexible destiné à relier mutuellement les chariots inférieurs suivant une distance intermédiaire qui est sensiblement égale à la distance intermédiaire supplémentaire entre les éléments de fixation.
